# EUROPEAN PATENT APPLICATION

(11) **EP 4 742 703 A1**
(43) Date of publication of application: **13.05.2026**
(21) Application number: 24212181.2
(22) Date of filing: 11.11.2024
(51) Int. Cl.: H04W 4/029

(54) **A TRACKING DEVICE**

(71) Applicant: Alps Alpine Europe GmbH, 85716 Unterschleißheim (DE)
(72) Inventor: GRONOSTAY, Heiko, 80809 München (DE)
(74) Representative: Maiwald GmbH

(57) **Abstract**

The disclosure relates to a tracking device (100) for transmitting electronic messages (O), wherein the tracking device (100) comprises a logic unit (10) and a sender unit (20), wherein the logic unit (10) is configured for generating a bitstream (B) by decoding a device information of the tracking device (100) and providing the bitstream (B) to the sender unit (20), wherein the sender unit (20) is configured for receiving the bitstream (B), generating an electronic message (O) by modulating the bitstream (B) and transmitting the electronic message (O), wherein all of the units of the tracking device (100) consist of discrete elements.

## Description

### TECHNICAL FIELD

The present disclosure relates to a tracking device for asset tracking.

### BACKGROUND ART

With growing demand for efficient asset tracking, existing devices often require complex and costly infrastructure. Many current devices are not only expensive, but also complicated, making them less accessible for wider use. Tracking devices using affordable technologies such as Bluetooth and Near Field Communication, NFC, are limited by their short-range radio capabilities and still rely on dedicated, costly infrastructure. Meanwhile, tracking devices with long-range radio capabilities do not meet the price points required for low-cost asset tracking. This highlights the need for a tracking device that offers long range, radio capabilities without the complexity and cost of traditional systems yet remains affordable.

### SUMMARY

The problem is at least partially solved or alleviated by the subject matter of the independent claims of the present disclosure, wherein further examples being included in the dependent claims.

According to a first aspect, there is provided a tracking device for transmitting electronic messages, wherein the tracking device comprises a logic unit and sender unit, wherein the logic unit is configured for generating a bitstream by decoding a device information of the tracking device and providing the bitstream to the sender unit, wherein the sender unit is configured for receiving the bitstream, generating an electronic message by modulating the bitstream and transmitting the electronic message, wherein all of the units of the tracking device consist of discrete elements. Instead of using relatively expensive and complex microcontroller in the tracking device, all the units of the tracking device are made of discrete elements. Particularly, the logic unit of the tracking device instead of using microcontroller IC and software, are implemented using discrete elements. Thus, this configuration provides a tracking device with low complexity and significant low productions cost.

The electronic message may comprise data or information generated, processed or transmitted by a tracking device. The electronic message may specifically include information through variations in amplitude, frequency, or phase. In particular, the electronic message may be a signal. The signal may be either a continuous analogue signal that varies over time or a sequence of discrete values, typically in the form of binary data. The continuous analogue signal may correspond to at least one physical quantity that it represents, wherein it may be continuous in time and amplitude and may take any value within a given range at any point in time. The sequence of discrete values may particularly correspond to voltage levels in the tracking device.

Transmitting the electronic message may involve wirelessly transmitting the message through an antenna of the tracking device to receivers within a transmission range, wherein wirelessly may specifically include using radio waves and/or electromagnetic waves. Additionally, the transmitting the electronic message may involve transmitting the electronic message using light waves through optical fibers.

The bitstream may comprise a continuous sequence of bits or binary digits generated, processed or transmitted. Each individual bit of the bitstream may represent the smallest unit of digital information, where the bits may represent a binary value of 0 or 1. The bits of the bitstream may include digital data, such as text, images, audio, video, or control information. The bitstream may be transmitted serially, where serial transmission may involve sending the bits one after another over a single channel.

The logic unit may be the unit of the tracking device where the bitstream is generated. The Sender unit may be the unit of the tracking device where the bitstream is received, modulated, and transmitted by the sender unit, wherein the sender unit may be a radio front-end. The device information used by the logic unit for generating the bitstream may specifically comprise a device information assigned to the tracking device or a component information assigned to at least one component within the tracking device, wherein the device information and/or the component information may be stored in a memory.

In general, a discrete element may refer to an individual electronic component or device that performs a basic logic function, typically at the level of binary logic (0 or 1). Discrete element may be separate entities that can be combined in various ways to form complex digital circuits. Discrete elements may include logic gates, flip-flops, counters, registers, decoders, encoders, multiplexers, and demultiplexers. Discrete element may include basic building blocks such as AND, OR, and NOT elements, etc. The flip-flop elements may be used to store binary information or to activate another element. The counters may be used to count pulses or events and run a program. The registers may temporarily store data. The decoders and the encoders may be used to convert between different digital formats. The multiplexers and the demultiplexers may be used to select or distribute digital signals. Each discrete element may typically perform a specific function based on its design and configuration. They differ from integrated circuits, ICs, where multiple logic functions are integrated into a single package. The discrete elements are particularly used where specific functionality or customisation is required or where integration into larger systems is done manually for specific design purposes.

The tracking device may comprise a battery unit to supply power to the logic unit and the sender unit, wherein the battery unit is a discrete element.

The tracking device for transmitting the electronic messages may comprise the sender unit, the logic unit, and the battery unit. The logic unit may be specifically configured for generating the bitstream by decoding device information of the tracking device and provide the bitstream to the sender unit. The bitstream may particularly include at least one protocol header. The sender unit is configured for receiving the bitstream, generate the electronic message by modulating the bitstream, and transmit the electronic message, comprising the at least one protocol header. The all units of the tracking device consist of discrete elements. The at least one protocol especially includes a communication protocol used by the decoder to send the bitstream containing device information. The at least one protocol also specifies how the bitstreams are formatted, transmitted, and interpreted between at least two units of the tracking device. The at least one protocol may involve a Radio Frequency, RF modulation. For example, the protocol may be a LPWAN protocol, such as a Sigfox protocol. Thus, a tracking device made of discrete elements with long-range transmission capabilities, while remaining affordable, is provided.

The tracking device may be used in asset tracking. For example, the tracking device may be used for letter tracking. The tracking device may periodically send the electronic messages comprising a status and a location information of the letter, or it may send a single electronic message indicating the status of the letter, wherein the status of the letter may be either closed or opened.

According to an example, the discrete elements comprise transistors and passive electronic elements.

The discrete elements of the tracking device may comprise transistors. To build a discrete element, such as a NAND element, a circuit comprising two transistors may be needed. Specifically, if both inputs of the transistors are high, an output of the NAND circuit may be 0, and if the both inputs of the transistors are low, the output of the NAND circuit may be 1.

The discrete elements of the tracking device may comprise transistors and passive elements, comprising capacitors, inductors, and/or resistors. To build a discrete element, such as an inverter element, which also refers to a NOT element, a circuit computing one transistor and at least two resistors may be required. Specifically, if input of the transistor is high, an output of the NOT circuit will be 0, and if the input of the transistor is low, the output of the NOT circuit will be 1.

According to an example, the discrete elements of the tracking device are printed elements.

The discrete elements of the tracking device, comprising the logic unit and the sender unit may be printed elements. Additionally, the batterie unit may be a printed element. In other words, all units of the tracking device may consist of printed elements. The printed elements may comprise the discrete elements being printed using printing techniques. The printed elements may specifically be made with conductive inks and/or conductive materials. Using printed elements in the tracking device may provide simplicity of circuitries as well as lower weight and size of the tracking device. By using the printed elements in the tracking device there may be no need for a microcontroller. Thus, a tracking device made of printed discrete elements with simplicity of its circuitries as well as lower weight and size, is provided. Furthermore, the discrete element of the tracking device may be an Application-Specific Integrated Circuit, ASIC. The ASIC in the tracking device may be provided to perform a particular function or set of functions with high efficiency and speed. ASICs are highly specialized chips designed to perform specific tasks with maximum efficiency and minimal power consumption. By using an ASIC in the tracking device, the tracking device may achieve operation with high accuracy while consuming minimal resources, making it ideal for prolonged deployment in various tracking scenarios, from logistics and fleet management to wildlife monitoring and asset tracking. The ASIC may comprise discrete elements, memory blocks, analog components, and Input/Output, I/O interfaces. Like printed elements, by using the ASIC in the tracking device there may be no need for a microcontroller. In an example, at least one unit of the tracking device is printed unit and at least one unit of the tracking device is implemented as an ASIC. In another example, the tracking device may comprise smart labels. The smart labels may comprise printed elements and at least one conventional component with chip-on-board design. The at least one conventional component may be a processor or a sender unit.

According to an example, the tracking device comprises at least one flexible substrate layer wherein the discrete elements of the tracking device are printed on the at least one flexible substrate layer.

The discrete elements of the tracking device may be printed onto various flexible substrates, including plastics, paper, or fabric. The flexible plastic substrate may comprise polyethylene terephthalate, PET and/or polyimide, PI. The flexible substrate of the tracking device may be made of stretchable materials. Accordingly, the printed discrete elements of the tracking device may specifically be stretchable. Thus, a tracking device made of printed discrete elements on a flexible substrate with long-range transmission capabilities, while remaining affordable, is provided.

According to an example, the logic unit is configured for generating the bitstream periodically and/or by an external trigger.

The logic unit may be configured for generating the bitstream and sending it to the sender unit periodically and/or by an external trigger. Specifically, periodic generation of bitstream by the logic unit may occur at regular intervals of time. The logic unit may be configured for generating a sequence of bitstreams at the regular intervals of time. The regular intervals of time in generating the sequence of bitstreams may be pre-determined or may be dynamically determined during the bitstream generation by the logic unit. Furthermore, the logic unit may be configured for generating the bitstream or the sequence of bitstreams in response to an external trigger. The external trigger may activate an element in the logic unit to generate the bitstream or a sequence of bitstreams. The logic unit may comprise a flip-flop, which may be set when the logic unit generates the bitstream periodically and/or by an external trigger. The external trigger may set the flip-flop of the logic unit. Consequently, the logic unit may generate the bitstream or a sequence of bitstreams using set status of the flip-flop. Additionally, the external trigger may be configured for stopping the logic unit from generating the bitstream. Thus, a tracking device with automatic activation and/or external manual activation is provided. Instead of using expensive and complex microcontroller and software in the logic unit of the tracking device, all the units of the logic unit are implemented using discrete elements. Thus, this configuration provides a tracking device with low complexity and significant low productions cost.

According to an example, the external trigger comprises actuating a button of the tracking device and/or triggering a tracking device related event.

The tracking device may comprise a button connected to the logic unit, wherein actuating the button may serve as the external trigger for the logic unit to generate a bitstream. Additionally, the external trigger may specifically comprise triggering a tracking device-related event, wherein this event may be a signal received by the logic unit without the need for the button. The flip-flop of the logic unit may be set when the button of the tracking device has been actuated and/or when the tracking device-related event has been triggered. The external trigger information may include details about actuating the button of the tracking device and/or about triggering a tracking device related event, wherein the tracking device related event may be a signal received by the decoder without a button. The device related event may comprise a short circuit and/or an open circuit of any element within the logic unit. In an example, the device related event may be losing one electrically connection between two elements of the logic unit. Consequently, the decoder of the logic unit may receive a signal indicating of the device related event, and the decoder may generate a bitstream and send it to the sender unit. Thus, a tracking device with non-automatic activation, particularly with external button actuation and/or event-dependent activation, is provided.

According to an example, the logic unit comprises a memory, a counter and a decoder, wherein the memory is configured for storing memory data comprising the device information, wherein the counter is configured for providing a program counter and wherein the decoder is configured for generating the bitstream using the memory data of the memory and the program counter of the counter.

The logic unit may comprise a decoder for generating the bitstream and a memory for storing the memory data comprising the device information. The decoder may generate the bitstream using input information, which may specifically comprise the device information stored in the memory, an external trigger information, and/or a pre-determined value for the intervals of time in generating the sequence of bitstreams. The decoder may be configured for sending the bitstream to the sender unit. At the same time the bitstream may be stored in the memory. The memory may be configured for storing the bitstream using resistors, particularly, using pull up and/or pull down arrangements of resistors. The sender unit may be configured for receiving the bitstream and transmitting the electronic message. The electronic message may comprise an actual location of the tracking device. A receiver may be configured for receiving the electronic message and determining the actual location of the tracking device. The receiver may be configured for using triangulation and/or trilateration method to determine the actual location of the tracking device.

The logic unit may comprise a counter and preferably a clock oscillator. The flip-flop may be connected to the decoder and may be configured for operating in two different statuses: typically, set or reset status. The flip-flop may be configured for sending information about its status to the decoder. Additionally, the flip-flop may be configured for being set and/or reset periodically and/or by an external trigger, wherein the external trigger may involve actuating the button of the tracking device and/or triggering a tracking device-related event. If the flip-flop is set, stored information in the memory may be sent. The stored information may include device information, information about the external trigger, and/or the pre-determined value for the intervals of time in generating the sequence of the bitstreams. In an example, the memory may be a flip-flop. In another example, the flip-flop may be set when the device related event happened. In another example, when the button is pressed, the flip-flop may be set, storing information regarding the button press in the memory. Simultaneously, the decoder may generate the bitstream and send it to the sender unit, wherein the bitstream may comprise at least one protocol header and the information stored in the memory, particularly the device information. The decoder may be configured for generating the bitstream using the status information from the flip-flop. The flip-flop may be reset after the decoder sends the bitstream to the sender unit. The counter, the decoder, and the clock oscillator may be connected to one another. The clock oscillator may store the pre-determined value for the intervals of time in generating the bitstream and may be configured for controlling the counter in providing a program counter continuously. The decoder may be specifically configured for generating delays between the bitstreams periodically. The flip-flop may store the information when an external trigger has occurred. To add a constant delay between the bitstreams, the program counter values may continue increasing after the last bitstream has been sent without decoding them. When the counter value reaches a maximum value, it overflows to zero and next bitstream may be sent. The decoder may then generate a delay before sending a second bitstream. Instead of using expensive and complex microcontroller and software in the logic unit of the tracking device, all the units of the logic unit are made of discrete elements. Particularly, the decoder and the counter are implemented using discrete elements. Thus, this configuration provides a tracking device with low complexity and significant low productions cost.

According to an example, the decoder comprises a plurality of logic sub-unit and an OR element. The plurality of logic sub-unit is configured for providing at least one bit input to the OR element based on the program counter and the memory data. The plurality of logic sub-unit comprises at least one AND element and at least one inverter element. The OR element (3) is configured for outputting the bitstream (B) based on the bit input. The OR element may be a discrete OR element. The OR element is a element comprising at least two logic inputs and a logic output, wherein the logic input and the logic output may be 0 or 1.

Preferably, the plurality of logic sub-unit is configured for providing at least one bit input to the OR element based on the program counter, the memory data and external trigger information. The decoder may comprise a plurality of logic sub-units and an OR element, wherein the plurality of logic sub-units may comprise at least two AND elements. The sub-unit comprising at least two AND elements may decode a maximum program counter value, for example 1111 for a 4 stage sub-unit. The plurality of logic sub-units may further comprise at least one inverter element to determine other program counter values. In an example, the decoder may comprise a first AND element, a second AND element, and one or more inverter elements. The first AND element may be configured for determining a counter value based on the program counter, particularly a program counter state. The second AND element may determine a memory value based on the memory data. The one or more inverter elements may be connected to input terminals of the first AND element, where an output terminal of the first AND element may be connected to an input terminal of the second AND element. Another input terminal of the second AND element may be connected to the memory, and outputs of the plurality of logic sub-units may be connected to plurality of input terminals of the OR element. The AND element may be a discrete AND element. The AND element is a element comprising at least two logic inputs and a logic output, wherein the logic input and the logic output may be 0 or 1.

The counter, the memory, and the clock oscillator may be connected to the plurality of logic sub-units. The clock oscillator may comprise a predetermined value for the intervals of time in generating the sequence of bitstreams and may be configured for running the program counter continuously. The intervals of time in generating the sequence of bitstreams may be generated by the clock oscillator. The program counter may increase and/or decrease the intervals of time in generating the sequence of bitstreams generated by the clock oscillator. In an example, the decoder may comprise 12 logic sub-units representing 12 decode steps and 12 memory values. In another example, the decoder may comprise 10 logic sub-units representing 10 decode steps and 10 memory values. The plurality of logic sub-units may comprise a third AND element, which may determine information about the external trigger. In an example, the third AND element may comprise information about actuating the button of the tracking device.

When the flip-flop is set, the counter value may be 1, and a protocol header Bit 1 may be sent. In the next step, the counter value may be 2, and a protocol header Bit 2 may be sent. In the following step, the counter value may be x, and last protocol header Bit, specifically protocol header Bit x, may be sent. In the next step, the counter value may be x+1, and a memory value 1 may be sent. In the subsequent step, the counter value may be x+2, and a memory value 2 may be sent. In the next step, the counter value may be x+y, and last memory value, particularly a memory value y, may be sent. At the end, after one cycle, the bitstream may be sent, and the flip-flop may be reset.

The OR element of the decoder may output a 1 if the memory value of the corresponding program counter state is 1; otherwise, it may output 0. The bitstream may be generated by the decoder by increasing the program counter at regular intervals via the clock oscillator.

In one example, to generate a fixed 1 value at a specific counter state, particularly for generating a fixed protocol header, the plurality of logic sub-units may consist of the first AND element and the third AND element. In another example, to generate a fixed 0 value at a specific counter state, the plurality of logic sub-units may consist of only one or more inverter elements, with the first, second, and third AND elements removed. In another example, to generate a delay between the bitstreams sent periodically, one or more logic sub-units of the plurality of logic sub-units may be removed.

According to an example, the sender unit comprises an oscillator and a modulator, wherein the oscillator is configured for providing a carrier signal to the modulator and the modulator is configured for modulating the bitstream using the carrier signal of the oscillator.

The sender unit may comprise an oscillator for generating a carrier signal and a modulator for modulating the bitstream using carrier signal of the oscillator. The modulator may be specifically configured for receiving the bitstream from the logic unit and modulate bitstream using carrier signal of the oscillator. The carrier signal may be a periodic waveform, particularly a sinusoidal waveform, that carries no information and has a higher frequency than the bitstream.

The sender unit may also comprise a power amplifier and an antenna, wherein the power amplifier may be configured for amplifying an output signal of the modulator, namely a modulated bitstream. The power amplifier may further be configured for adjusting the output signal of the modulator into a form that the antenna can transmit as an electromagnetic wave using a radio protocol.

According to an example, the oscillator is a discrete ring oscillator comprising an odd number of inverter elements.

The inverter element may comprise a discrete NOT element. The discrete NOT element is a element comprising a logic input and a logic output, wherein the logic input and the logic output may be 0 or 1. The oscillator may specifically consist of an odd number of inverter elements, arranged in a direct-coupled ring configuration. Each inverter element may reverse a logic state of its input. Additionally, an output of the oscillator may loop back to its input. When the input to the inverter element is 1, the output may become 0, and vice versa. The odd number of inverter elements may ensure that there is no stable state for the input and output signals within the ring. For instance, applying a 1 to the input of the ring may cause it to oscillate between 1 and 0 as it traverses the inverter elements. Upon completing one cycle, a 0 may be fed back to the input, perpetuating the oscillation between 1 and 0 around the ring. This continual oscillation may generate a recurring pattern of high or 1 and low or 0 states. Moreover, this oscillation may generate the carrier signal used by the modulator to modulate the bitstream. The frequency of this carrier signal may depend on the total delay through the ring, which may be determined by the number of inverter elements and their respective delays.

According to an example, the modulator is configured for performing a binary modulation using two states of the bitstreams. the binary modulation may be a binary phase modulation PM or a binary amplitude modulation AM. The modulator may use two different phases of a carrier signal (0° and 180°) or may use the presence and absence of a carrier signal to represent binary 1 and 0, respectively. The modulator may be simple to implement, making it suitable for systems with low complexity requirements. Furthermore, the modulator may be power-efficient. The binary modulation may commonly be used in power-constrained systems (for example tracking device) due to absence of a signal during the transmission of a 0 or it may offer a good power efficiency because of its constant envelope signal.

According to an example, the binary phase modulation is a Binary Phase Shift Keying, BPSK modulation and the binary amplitude modulation is an On-Off Keying, OOK modulation.

The BPSK modulation may be used to transmit binary data over a communication channel. In the BPSK modulation, the bitstreams may be modulated onto the carrier signal of the oscillator, with the modulation specifically referring to the phase difference between binary 0 and 1. In the BPSK modulation, the carrier signal may be a sinusoidal waveform. A bitstream with a value of 0 may correspond to a 180-degree phase shift of the carrier signal, while a bitstream with a value of 1 may correspond to no phase shift. For example, the modulated signal may comprise a portion of the carrier signal, particularly represented as sin(ωt) when the bitstream has a value of 1, and it may comprise a 180-degree phase shift of the carrier signal, particularly represented as sin(cot + π) or -sin(ωt) when the bitstream has a value of 0.

The OOK modulation may be a simple form of Amplitude-Shift Keying, ASK modulation, where the bitstream may be modulated by varying an amplitude of the carrier signal between two levels: a first level representing the bitstream having a value of 1 and a second level representing the bitstream having a value of 0. In the first level, the modulated signal may comprise a portion of the carrier signal, while in the second level, the modulated signal may comprise a constant value of 0. In the OOK modulation, the carrier signal may be a sinusoidal or square waveform. For example, if the carrier signal is a sinusoidal waveform, the modulated signal may specifically be represented as sin(ωt) when the bitstream has a value of 1, and the modulated signal may comprise a constant value of 0 when the bitstream has a value of 0.

Both the BPSK and OOK modulation may be implemented in the sender unit of the tracking device using discrete elements. In an example the BPSK modulation may be a direct-digital BPSK modulation, and CMOS modulator may comprise an active balun and common gate switched. Both the BPSK and OOK modulation may provide easy implementation, reducing complexity and costs of modulation. Using the BPSK and OOK modulation to modulate the bitstream generated by the decoder may minimize complexity. In particular using BPSK and OOK modulation may be well-suited for the decoder. The combination of the decoder of the logic unit and the modulator using BPSK or OOK modulation in sender unit may provide the tracking device with easy implementation, reduced complexity, and lower costs.

According to an example, (claim 12) the tracking device is configured for providing a unidirectional communication.

The unidirectional communication may refer to a communication process where data flows in only one direction, in particular from a sender to a receiver without the ability for the sender to receive a response from the receiver. In this type of communication, the sender may transmit the electronic messages, but there may be no feedback or acknowledgment from the recipient. The unidirectional communication may be particularly used in scenarios where simplicity, power efficiency, and low data overhead are prioritised. The sender unit using a unidirectional protocol may transmit the electronic message by encoding the data into a small packet and sending it to the receiver, such as a base station or satellite. Since the communication is one-way, the sender may not expect or require any acknowledgment or response from the receiver, simplifying the communication process. The advantages of the unidirectional communication include reduced complexity, lower power consumption, and increased range, as the tracking device may not require a receiver unit to handle responses. The tracking device may only need to send data without checking the receiver's status or response. Unidirectional communication may be ideal for applications like tracking devices, where devices need to transmit a one-time electronic message or transmit electronic messages intermittently. The tracking devices may benefit from extended battery life due to the minimal power required for sending the electronic message without managing responses. Thus, a tracking device with simplicity, power efficiency, and low data overhead is provided.

According to an example, the sender unit is configured for using Sigfox protocol.

The Sigfox protocol is a Low-Power Wide-Area Network, LPWAN protocol designed for Internet of Things, IoT. The Sigfox protocol may operate on Ultra-Narrowband, UNB technology, enabling the tracking device to send the electronic messages over long distances with minimal power consumption. The Sigfox protocol may be particularly suitable for applications that require infrequent communication, such as asset tracking. The sender unit using the Sigfox protocol may transmit the electronic message by converting it into a small data packet and sending it to nearest Sigfox base station. Sigfox network may be designed to handle very lightweight communications, so the data packet may have more than 12 bytes per electronic message including the header. The base station of the Sigfox then may relay the electronic message to cloud infrastructure of the Sigfox, which may process and forward the electronic message to server of recipient or application. The tracking device may use the Sigfox protocol and integrate with the Sigfox network. The key advantages of the Sigfox protocol may be its long-range coverage, low energy consumption, and cost-effectiveness. Protocols like Sigfox may be based on unidirectional communication. Therefore, the tracking device may be specifically configured for providing unidirectional communication using the Sigfox protocol. Tracking devices using the Sigfox protocol may operate on a single battery for years, making them ideal for remote or hard-to-reach locations. Additionally, low bandwidth requirements result in reduced operational costs, making the Sigfox protocol a popular choice for large-scale IoT deployment. The tracking device, made of discrete elements with significantly low constructional costs, may be integrated with the Sigfox network. Thus, a low-cost tracking device, compatible with the Sigfox protocol and integrated into the Sigfox network, is provided. According to an example, the tracking device comprises less than 5,000 transistors.

The tracking device with fewer than 5,000 transistors may be provided for simplicity. The tracking device may perform specific functions using elements, meaning each element may be implemented with individual transistors. In contrast to a tracking device with a microcontroller, which may have a much higher transistor count-typically in the tens or hundreds of thousands-this configuration may be more efficient for simple tasks like sending the electronic messages, offering low power consumption and lower costs. In an example, the tracking device may consist of less than 2,000 transistors. Thus, a tracking device that is efficient for simple tasks, has low energy consumption, and is cost-effective is provided.

According to a second aspect, there may be provided a method for transmitting electronic messages by a tracking device, wherein the tracking device comprises a logic unit and a sender unit, wherein the method comprises: generating, by the logic unit, a bitstream by decoding a device information of the tracking device and providing the bitstream to the sender unit, generating and transmitting, by the sender unit, an electronic message.

The method for transmitting electronic messages by the tracking device may comprise two steps. In a first step, the bitstream may be generated by the logic unit by decoding the device information of the tracking device, then the bitstream may be provided to the sender unit. In the first step, the bitstream may be generated by the logic unit periodically and/or by an external trigger. Specifically, the bitstream may be generated by the logic unit by actuating a button of the tracking device and/or by triggering a tracking device related event. In an example, the bitstream may be generated by the logic unit using the device information stored in memory.

In a second step, the electronic message may be generated and transmitted by the sender unit. In the second step, generating the electronic message may comprise modulation and amplification. Specifically, the bitstream from the first step may be modulated by the sender unit using the BPSK modulation and/or OOK modulation. Then, the modulated signal may be amplified by the sender unit. Finally, the amplified signal may be transmitted by an antenna of the sender unit. The amplified signal may comprise the electronic message.

It should be noted that the above examples may be combined with each other irrespective of the aspects involved. Accordingly, the method may be combined with structural features and, likewise, the apparatus and the system may be combined with features described above regarding the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic view of an example tracking device;
- Figure 2: shows a schematic view of an example decoder; and
- Figure 3: shows two example configurations of the logic sub-units of the decoder.

### DETAILED DESCRIPTION

The Figures are merely schematic representations and serve only to illustrate examples of the disclosure. Identical or equivalent elements are in principle provided with the same reference signs.

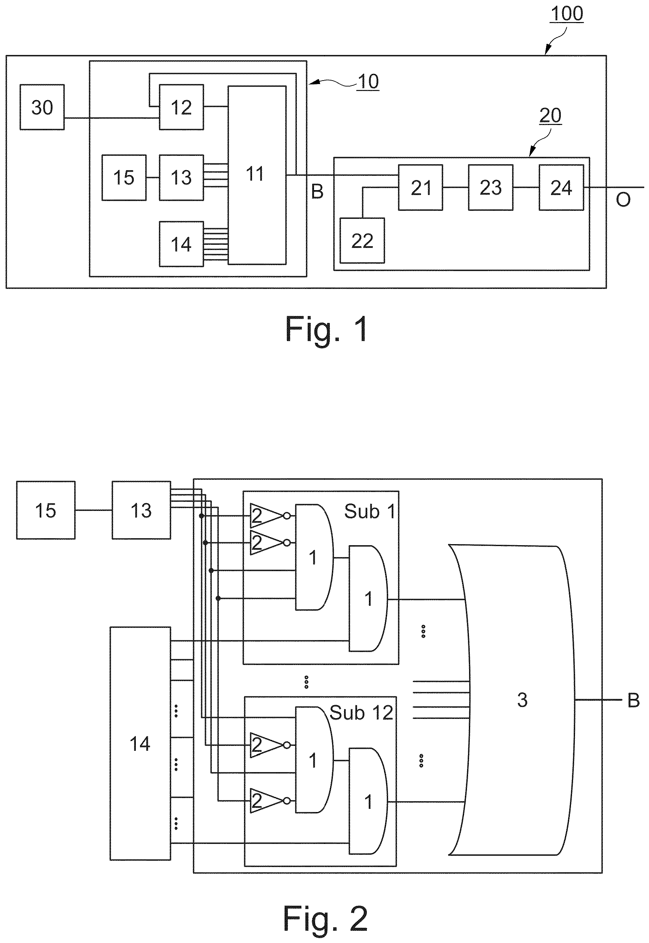

Fig. 1 shows a schematic of an example tracking device 100. The tracking device 100 comprises a logic unit 10 and a sender unit 20. The logic unit 10 comprises a decoder 11, a flip flop 12, a counter 13, a memory 14 and a clock oscillator 15. The decoder 11, the flip flop 12, the counter 13, the memory 14 and the clock oscillator 15 are implemented using discrete elements. Particularly, the decoder 11, the flip flop 12, the counter 13, the memory 14 and the clock oscillator 15 consist of discrete elements. The flip flop 12, the counter 13 and the memory 14 are connected to the decoder 11. The clock oscillator 15 is connected to the counter 13. The sender unit 20 comprises a modulator 21, a carrier oscillator 22, a power amplifier 23 and an antenna 24. The modulator 21, the carrier oscillator 22, the power amplifier 23 and the antenna 24 are implemented using discrete elements. Particularly, modulator 21, the carrier oscillator 22, the power amplifier 23 and the antenna 24 consist of discrete elements. The logic unit 10 is configured for generating a bitstream B by decoding device information of the tracking device 100 and providing the bitstream B to the sender unit 20. The sender unit 20 is configured for receiving the bitstream B, generate an electronic message O by modulating the bitstream B, and transmit the electronic message O. Particularly, the modulator 21 of the sender unit 20 is configured for modulating the bitstream B using a carrier signal of the carrier oscillator 22 and sending a modulated signal M to the power amplifier 23. The power amplifier 23 is configured for receiving the modulated signal M, amplifying it and sending an amplified signal A to the antenna 24. The antenna 24 is configured for receiving the amplified signal A and transmitting it as an electronic message O. All of the units of the tracking device 100 consist of discrete elements. The discrete elements of the tracking device 100 comprise transistors and passive electronic components. The tracking device 100 consists of specifically printed elements. The tracking device 100 comprises at least one flexible substrate layer, on which the discrete elements of the tracking device 100 are printed. The logic unit 10 is configured for generating the bitstream B periodically and/or in response to an external trigger. In this embodiment, the tracking device 100 comprises a button 30. The external trigger thus comprises actuating the button 30 of the tracking device 100. Alternatively, the external trigger could comprise triggering an event related to the tracking device 100.

The flip-flop 12 is configured for being in two different states, typically, set or reset. The flip-flop 12 is configured for sending information about its status to the decoder 11. Additionally, the flip-flop 12 is configured for being set and/or reset periodically and/or by an external trigger, particularly by actuating the button 30 of the tracking device 100 and/or by triggering an event related to the tracking device 100. If the flip-flop 12 is set, information is stored in the memory 14, which may comprise tracking device 100 information and/or information about the external trigger, and/or the predetermined intervals for generating the sequence of the bitstream B. For example, when the button 30 is pressed, the flip-flop 12 is set and stores information regarding the pressed button 30 in the memory 14. Additionally, at the same time, the decoder 11 generates a bitstream B and sends it to the sender unit 20. The bitstream B comprises at least one protocol header and the information stored in the memory 14, particularly the tracking device 100 information. The decoder 11 is configured for generating the bitstream B using the status of the flip-flop 12. The flip-flop 12 is configured for reseting after the decoder 11 sends the bitstream B to the sender unit 20. The counter 13, decoder 11, and clock oscillator 15 are connected to one another. The clock oscillator 15 comprises the predetermined intervals for generating the sequence of the bitstream B and is configured for running a program counter continuously. The decoder 11 is specifically configured for generating delays between the bitstreams B periodically. For example, the decoder 11 sends a first bitstream B, and at the same time, the flip-flop 12 is reset To add a constant delay between the bitstreams B, the program counter values may continue increasing after the last bitstream B has been sent without decoding them. When the counter value reaches a maximum value, it overflows to zero and next bitstream B may be sent.

The sender unit 20 comprises an oscillator 22 and a modulator 21 for modulation. The logic unit 10 and the sender unit 20 are implemented using discrete elements. Particularly, the logic unit 10 and the sender unit 20 consist of discrete elements. The carrier oscillator 22 is configured for providing a carrier signal to the modulator 21, and the modulator 21 is configured for modulating the bitstream B from the logic unit 10 using the carrier signal of the carrier oscillator 22 and provide a modulated signal M to the power amplifier 23. The sender unit 20 is specifically responsible for receiving, modulating, and transmitting the bitstream B. The sender unit 20 also comprises a power amplifier 23 and an antenna 24, wherein the power amplifier 23 is configured for amplifying an output signal of the modulator 21, particularly a modulated signal M. The modulated signal M is amplified by the power amplifier 23, resulting in an amplified signal A. Finally, the amplified signal A is transmitted by the antenna 24. The power amplifier 23 is configured for adjusting the modulated signal M to a form that the antenna 24 can transmit as an electronic message O, specifically as an electromagnetic wave with a radio protocol. In one example, the carrier signal of the carrier oscillator 22 is a periodic waveform, particularly a sinusoidal waveform that carries no information and comprises a higher frequency than the bitstream B. The modulator 21 is configured for performing the binary phase shift keying, BPSK modulation or the on-off keying, OOK modulation.

Fig. 2 shows a schematic of an example decoder. The decoder comprises a plurality of, in this case twelve, logic sub-units S1-S12 and an OR element 3, wherein the plurality of logic sub-units S1-S12 is configured for determining a bit input based on a provided program counter of the counter 13 and a device information of the memory 14. In particular, the plurality of logic sub-units S1-S12 is configured for determining the bit input based on the program counter and a memory value of the memory 14. The memory value preferably comprises the tracking device 100 information. The plurality of logic sub-units S1-S12 and the OR element 3 are implemented using discrete elements. Particularly, the plurality of logic sub-units S1-S12 and the OR element 3 consist of discrete elements. The program counter comprises information about the program running in the counter 13. Outputs of the plurality of logic sub-units S1-S12 are connected to a plurality of input terminals of the OR element 3, wherein output signal of the OR element 3 comprises the bitstream B. The plurality of logic sub-units S1-S12 comprises a first AND element 1A, a second AND element 1B, and one or more inverter elements 2. The counter 13 and the memory 14 are connected to the plurality of logic sub-units S1-S12. The counter 13 is connected to the first AND element 1A, and the memory 14 is connected to the second AND element 1B. The first AND element 1A determines a counter value based on the program counter, particularly the program counter state. The second AND element 1B determines a memory value based on the memory data. One or more inverter elements 2 are connected to input terminals of the first AND element 1A and to the counter 13. An output terminal of the first AND element 1A is connected to an input terminal of the second AND element 1B. The outputs of the plurality of logic sub-units S1-S12 are connected to the plurality of input terminals of the OR element 3. The output signal of the OR element 3 comprises the bitstream B. The clock oscillator 15 comprises the predetermined intervals for generating the sequence of the bitstream B and is configured for running the program counter continuously. If the flip-flop 12 is set, stored information in the memory 14 will be sent. The stored information includes device information, information about the external trigger, and/or the pre-determined value for the intervals of time in generating the sequence of the bitstreams B. In one example, the decoder 11 may comprise 12 logic sub-units S1-S12 representing 12 decode steps and 12 memory values. In another example, the decoder 11 may comprise 10 logic sub-units representing 10 decode steps and 10 memory values. The OR element 3 of the decoder 11 outputs a 1 if the memory value of the corresponding program counter state is 1; otherwise, it outputs 0. The OR element 3 may output a 1 if the memory value of the corresponding counter state is 1. If the memory value of the corresponding counter state is 0, the OR element 3 may output a 0. The bitstream B may be created by increasing the program counter in regular intervals via the clock oscillator 15.

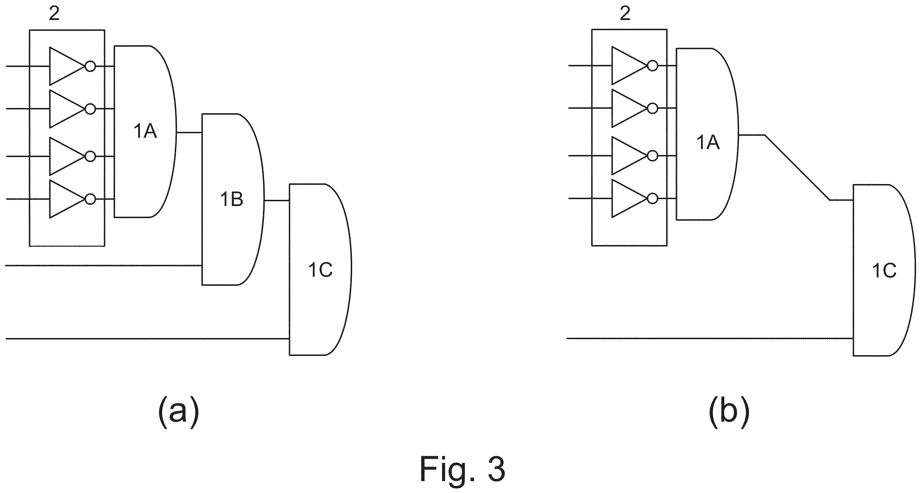

Fig. 3 (a) and (b) shows two example configurations of the logic sub-units S1-S12 of the decoder 11. The plurality of logic sub-units S1-S12 comprises a third AND element 1C. The third AND element 1C determines information about the external trigger. In one example, the third AND element 1C specifically determines whether the button 30 of the tracking device 100 has been actuated. The bitstream B is generated by the decoder 11 by incrementing the program counter at regular intervals via the clock oscillator 15. In one example (Fig. 3 (b)), to generate a fixed 1 value at a specific counter state, particularly for generating a fixed protocol header, the plurality of logic sub-units S1-S12 comprises a first AND element 1A and a third AND element 1C. In another example, to generate a fixed 0 value at a specific counter state, in the plurality of logic sub-units S1-S12 the one or more inverter elements 2, the first, second, and third AND elements 1A, 1B, and 1C have been removed. In another example, to generate a delay between the bitstreams B sent periodically, one or more logic sub-units S1-S12 of the plurality of logic sub-units S1-S12 may be removed. In a first example the logic sub-unit S1 may comprise three AND elements 1A-1C and four inverter elements 2. The four inverter elements 2 may be connected to the first AND element 1A. Output of the first AND element 1A may be connected to the second AND element 1B. Output of the second AND element 1B may be connected to the third AND element 1C. The first AND element 1A may check the program counter state and/or decode step 0. If a decoded counter digit is 0, an inverter element 2 may have to be added before the input of the first AND element 1A, to change the decoded counter digit to 1. The second AND element 1B may retrieve the memory value at the corresponding program counter state. It may only output 1 if the program counter is at the correct value and the memory value is 1. The third AND element 1C may check if the button 30 has been pressed. If the button 30 has been pressed, output of the third AND element 1C may be 1. If the button 30 has not been pressed, output of the third AND element 1C may be 0. In a second example, the logic sub-unit S1 may comprise the first AND element 1A, the third AND element 1C and the four inverter elements 2, comparing to the first example, the second AND element 1B has been removed. The second AND element 1B may be removed to create a fix 1 value at a specific counter state A fix protocol header is being created by sending a specific sequence of "0" and "1", so it needs multiple of both, and the second AND element 1B removed. In a third example, the logic sub-unit S1 may comprise the first AND element 1A, the second AND element 1C and the four inverter elements 2, comparing to the first example, the third AND element 1C has been removed. The second AND element 1A and the third AND element 1C may be removed to create a fix 1 value at a specific counter state. In order to generate 1 one or more AND elements may be removed. Removing AND elements may increase the quantity of 1 being sent, unless all are removed. In an example, to generate a specific counter value, all the AND elements of the decoder 11 may be removed.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: AND element
- 1A: first AND element
- 1B: second AND element
- 1C: third AND element
- 2: inverter element
- 3: OR element
- 10: logic unit
- 11: decoder
- 12: flip flop
- 13: counter
- 14: memory
- 15: clock oscillator
- 20: sender unit
- 21: modulator
- 22: carrier oscillator
- 23: power amplifier
- 24: antenna
- 30: button
- 100: tracking device
- A: amplified signal
- B: bitstream
- O: electronic message
- M: modulated signal
- S1: logic sub-unit 1
- S12: logic sub-unit 12

## Claims

1. A tracking device (100) for transmitting electronic messages (O), wherein the tracking device (100) comprises a logic unit (10) and a sender unit (20);
wherein the logic unit (10) is configured for generating a bitstream (B) by decoding a device information of the tracking device (100) and providing the bitstream (B) to the sender unit (20);
wherein the sender unit (20) is configured for receiving the bitstream (B), generating an electronic message (O) by modulating the bitstream (B) and transmitting the electronic message (O);
wherein all of the units of the tracking device (100) consist of discrete elements.

2. The tracking device (100) of claim 1, wherein the discrete elements comprise transistors and passive electronic elements.

3. The tracking device (100) according to claim 1 and 2, wherein the discrete elements of the tracking device (100) are printed elements.

4. The tracking device (100) of any one of the preceding claims, wherein the logic unit (10) is configured for generating the bitstream (B) periodically and/or by an external trigger.

5. The tracking device (100) of claim 4, wherein the external trigger comprises actuating a button (30) of the tracking device (100) and/or triggering a tracking device (100) related event.

6. The tracking device (100) of any one of the preceding claims, wherein the logic unit (10) comprises a memory (14), a counter (13) and a decoder (11), wherein the memory (14) is configured for storing memory data comprising the device information, wherein the counter (13) is configured for providing a program counter and wherein the decoder (11) is configured for generating the bitstream (B) using the memory data the memory (14) and the program counter of the counter (13).

7. The tracking device (100) of claim 6, wherein the decoder (11) comprises a plurality of logic sub-unit (S1-S12) and an OR element (3);
wherein the plurality of logic sub-unit (S1-S12) is configured for providing at least one bit input to the OR element (3) based on the program counter and the memory data;
wherein the plurality of logic sub-unit (S1-S12) comprises at least one AND element (1) and at least one inverter element (2);
wherein the OR element (3) is configured for outputting the bitstream (B) based on the bit input.

8. The tracking device (100) of any one of the preceding claims, wherein the sender unit (20) comprises a carrier oscillator (22) and a modulator (21), wherein the carrier oscillator (22) is configured for providing a carrier signal to the modulator (21) and the modulator (21) is configured for modulating the bitstream (B) using the carrier signal of the carrier oscillator (22).

9. The tracking device (100) of claim 8, wherein the carrier oscillator (22) is a discrete ring oscillator comprising an odd number of inverter elements (2).

10. The tracking device (100) of any one of the preceding claims, wherein the modulator (21) is configured for performing a binary modulation using two states of the bitstreams (B), wherein the binary modulation is a binary phase modulation or a binary amplitude modulation.

11. The tracking device (100) of claim 10, wherein the binary phase modulation is a Binary Phase Shift Keying, BPSK modulation and the binary amplitude modulation is an On-Off Keying, OOK modulation.

12. The tracking device (100) according to any one of the preceding claims, wherein the tracking device (100) is configured for providing a unidirectional communication.

13. The tracking device (100) according to any one of the preceding claims, wherein the sender unit (20) is configured for using Sigfox protocol.

14. The tracking device (100) according to any one of the preceding claims, wherein the tracking device (100) comprises less than 5,000 transistors.

15. A method for transmitting electronic messages (O) by a tracking device (100), wherein the tracking device (100) comprises a logic unit (10) and a sender unit (20), wherein the method comprises:
generating, by the logic unit (10), a bitstream (B) by decoding a device information of the tracking device (100) and providing the bitstream (B) to the sender unit (20);
generating and transmitting, by the sender unit (20), an electronic message (O).

## Amended claims

### Amended claims in accordance with Rule 137(2) EPC.

1. A tracking device (100) for transmitting electronic messages (O), wherein the tracking device (100) comprises a logic unit (10) and a sender unit (20);
wherein the logic unit (10) is configured for generating a bitstream (B) by decoding a device information of the tracking device (100) and providing the bitstream (B) to the sender unit (20);
wherein the sender unit (20) is configured for receiving the bitstream (B), generating an electronic message (O) by modulating the bitstream (B) and transmitting the electronic message (O);
wherein all of the units of the tracking device (100) consist of discrete elements;
wherein the discrete elements of the tracking device (100) are printed elements.

2. The tracking device (100) of claim 1, wherein the discrete elements comprise transistors and passive electronic elements.

3. The tracking device (100) of any one of the preceding claims, wherein the logic unit (10) is configured for generating the bitstream (B) periodically and/or by an external trigger.

4. The tracking device (100) of claim 3, wherein the external trigger comprises actuating a button (30) of the tracking device (100) and/or triggering a tracking device (100) related event.

5. The tracking device (100) of any one of the preceding claims, wherein the logic unit (10) comprises a memory (14), a counter (13) and a decoder (11), wherein the memory (14) is configured for storing memory data comprising the device information, wherein the counter (13) is configured for providing a program counter and wherein the decoder (11) is configured for generating the bitstream (B) using the memory data the memory (14) and the program counter of the counter (13).

6. The tracking device (100) of claim 5, wherein the decoder (11) comprises a plurality of logic sub-unit (S1-S12) and an OR element (3);
wherein the plurality of logic sub-unit (S1-S12) is configured for providing at least one bit input to the OR element (3) based on the program counter and the memory data;
wherein the plurality of logic sub-unit (S1-S12) comprises at least one AND element (1) and at least one inverter element (2);
wherein the OR element (3) is configured for outputting the bitstream (B) based on the bit input.

7. The tracking device (100) of any one of the preceding claims, wherein the sender unit (20) comprises a carrier oscillator (22) and a modulator (21), wherein the carrier oscillator (22) is configured for providing a carrier signal to the modulator (21) and the modulator (21) is configured for modulating the bitstream (B) using the carrier signal of the carrier oscillator (22).

8. The tracking device (100) of claim 7, wherein the carrier oscillator (22) is a discrete ring oscillator comprising an odd number of inverter elements (2).

9. The tracking device (100) of any one of the preceding claims, wherein the modulator (21) is configured for performing a binary modulation using two states of the bitstreams (B), wherein the binary modulation is a binary phase modulation or a binary amplitude modulation.

10. The tracking device (100) of claim 9, wherein the binary phase modulation is a Binary Phase Shift Keying, BPSK modulation and the binary amplitude modulation is an On-Off Keying, OOK modulation.

11. The tracking device (100) according to any one of the preceding claims, wherein the tracking device (100) is configured for providing a unidirectional communication.

12. The tracking device (100) according to any one of the preceding claims, wherein the sender unit (20) is configured for using Sigfox protocol.

13. The tracking device (100) according to any one of the preceding claims, wherein the tracking device (100) comprises less than 5,000 transistors.

14. A method for transmitting electronic messages (O) by a tracking device (100), wherein the tracking device (100) comprises a logic unit (10) and a sender unit (20), wherein all of the units of the tracking device (100) consist of discrete elements, wherein the discrete elements of the tracking device (100) are printed elements, wherein the method comprises:
generating, by the logic unit (10), a bitstream (B) by decoding a device information of the tracking device (100) and providing the bitstream (B) to the sender unit (20);
generating and transmitting, by the sender unit (20), an electronic message (O).
